# EUROPEAN PATENT APPLICATION

(11) **EP 0 691 559 A1**
(43) Date of publication of application: **10.01.1996**
(21) Application number: 95304760.2
(22) Date of filing: 07.07.1995
(51) Int. Cl.: G02B 27/01, G02B 23/12

(54) **Head-mountable display system**

(30) Priority: 07.07.1994 GB 9413690
(71) Applicant: GEC-MARCONI LIMITED, Stanmore, Middlesex HA7 4LY (GB)
(72) Inventor: Rampton, Francis Neil, Sandon, Chelmsford, Essex CM2 7RN (GB)
(74) Representative: Waters, Jeffrey

(57) **Abstract**

A head-mountable display system comprises a sensor (5) for receiving infra-red radiation from a scene and a display (6) in which an image of the scene can be viewed. A video camera (9) is provided to enable visible light from the scene to be imaged on the display (6). The user of this display system is able to select the required image by means of a switch. This invention enables the user to view either the infra-red image or the visual image of his surroundings as desired without the need to move the display (6) clear of his line of sight, as was necessary hitherto.

## Description

This invention relates to head-mountable display systems, and especially to display systems in which thermal or infra-red radiation from a scene can be viewed.

Such systems have been incorporated in helmets used by firefighters, rescue personnel or other emergency service personnel, for example, to enable the emergency services personnel to be able to locate victims trapped in situations in which they cannot be readily seen.

It is clearly desirable to be able to view the visual image of a scene in addition to this thermal image. Various proposals have been made to this effect.

In one proposal, the head-mountable display is a monocular display, so that one eye is presented with the infra-red image, while the other views the normal visual image. However, eyestrain may occur due to the eyes being presented with two different images, often at different focal lengths, if the system is used by the wearer for any significant length of time. In addition, the brain takes time to accommodate the change in view when sight is transferred between the optical image and the infra-red image, and operator training is required to transfer vision between the views without becoming disorientated, so that in general biocular systems are preferred.

In one proposal for a biocular system, the image presented to the user is a combination of the infra-red image superimposed on the visual image. This system, however, increases manufacturing cost, will increase the size of the apparatus and may degrade optical performance.

In another proposal for a biocular system the infra-red image is reflected into the user's eyes by means of a mirror which has to be pivoted out of the viewing path to enable the visual image to be seen. Apart from the possibility of mechanical failure, there are problems concerned with cost and size. Another system (GB 2241793) employs a display for the thermal image below the user's sightline, but the display therefore obstructs the user's visual image.

Finally, a system has been proposed in which the display itself is manually movable between positions in front of, and clear of, the user's line of vision. However, there are certain situations in which the user needs to be well protected from his immediate surroundings e.g. in a fire involving hazardous chemicals. In such situations the user will be wearing protective clothing and apparatus which impair his ability to move the display or to adjust the display for optimum viewing.

The present invention provides a head-mountable display system comprising a sensor for receiving infra-red radiation from a scene and a display in which an image of the scene derived from the infra-red radiation can be viewed, and wherein a video camera is provided to enable visible light from the scene to be imaged on the display.

The provision of the video camera avoids the need for manipulation of the display, since the visual image can be imaged on the display in place of the thermal one.

The infra-red sensor and the video camera are preferably substantially co-boresighted to receive the radiation from similar fields of view.

The head-mountable display system is particularly suited to use in a firefighter's helmet, since protective clothing may prevent conventional systems for pivoting the display out of the field of view to permit direct viewing, to be used.

A switch located in a convenient position may be provided to switch between the thermal and visible images on the display.

A head-mountable display system constructed in accordance with the invention will now be described, by way of example, with reference to the accompanying drawings, in which:
Figure 1 is a front view of the head-mountable display system;
Figure 2 is a side view of the display system of Figure 1, partly in section; and
Figure 3 is a block diagram of the circuit of the system.

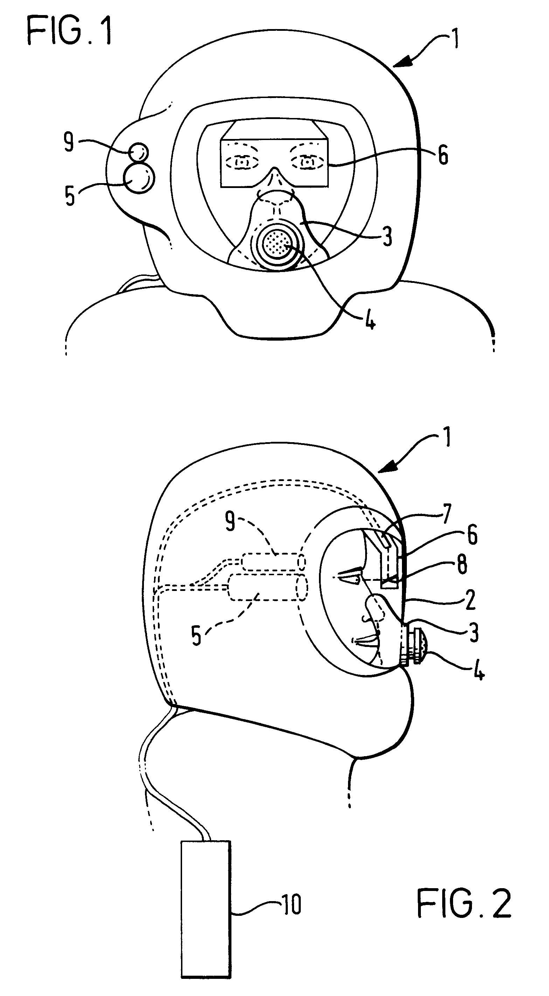

Referring to Figures 1 and 2, the head-mountable display system forms part of a firefighter's helmet, indicated generally by the reference numeral 1.

The helmet covers the whole of the user's head. A visor 2 protects the user's face. The visor 2 is transparent, but it does not need to be so. A mask 3 covers the user's nose and mouth, and the mask is attached to a mouthpiece 4 which can be connected to an air supply, thus enabling the firefighter to work in surroundings where there is little or no oxygen.

Many fires produce thick smoke which can greatly impair the firefighter's visibility. In such situations, it is necessary for the firefighter to be able to view an image of the infra-red (or thermal) radiation of the scene in order to locate victims, and the source of a fire.

To this end, an infra-red sensor 5 detects infra-red radiation from the scene and the infra-red image can be viewed by the user on display 6.

The display contains a cathode ray tube 7. A mirror 8 reflects the cathode ray tube image into the user's eyes.

In accordance with the invention, the head-mountable display system also includes a video camera 9, which can detect visual radiation from the scene. The video camera is co-boresighted with the infra-red sensor 5 and so can detect radiation from a similar field of view. The visual image can be viewed on the display 6 in place of the thermal image.

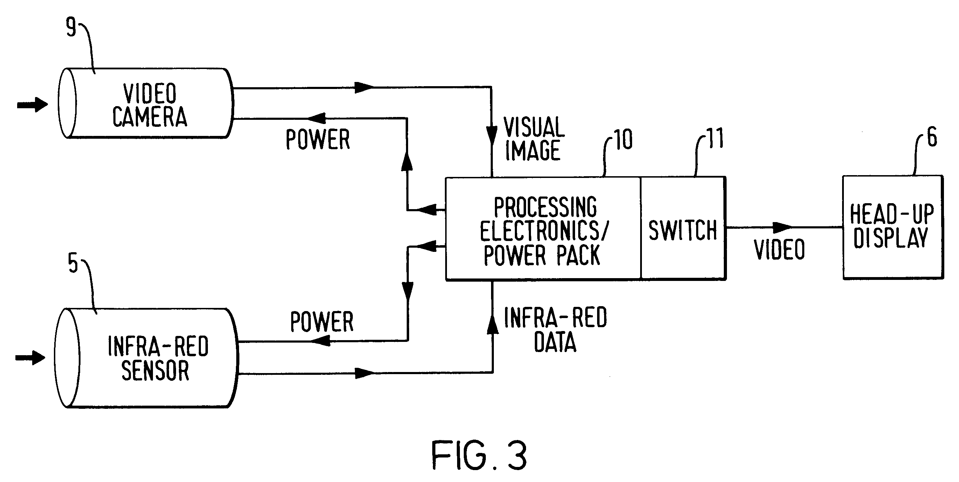

Referring to Figure 3, power is supplied from processing unit 10 to the video camera 9 and the infra-red sensor 5. Visual radiation from the scene is detected by the video camera 9 and the corresponding signal is sent to the processing electronics in the processing unit 10. Similarly, infra-red radiation from the scene is detected by the infra-red sensor 5 and the infra-red data is sent to the processing electronics in the processing unit 10. The processing electronics converts the data from the infra-red sensor 5 into an image as well as making compatible the images from the infra-red source and the visual source.

A switch 11 is connected to the processing unit 10 to enable either the infra-red image or the visual image to be selected. The signal selected then travels via cables to the display 6 where it is reflected by the mirror 8 into the eyes of the user. The switch 11 is mounted on a belt for easy access.

The advantage of this invention is that it enables the user to view either the infra-red image or the visual image of his surroundings as desired without the need to move the display clear of his line of sight. This would be a particular advantage if the user was wearing protective clothing in addition to the helmet which impaired his freedom of movement.

Of course, variations can be made without departing from the scope of the invention. Thus, the switch 11 need not be located on a belt. It could be located on any part of the helmet or protective suit the user may be wearing, and it could with advantage be positioned near any other controls already provided, for example, it may be situated in another accessible position e.g. on the breathing apparatus harness. The video camera 9 may be located on the opposite side of the head, to the infra-red sensor 5 to provide a counterbalance to minimise neck strain, if desired.

## Claims

1. A head-mountable display system comprising a sensor for receiving infra-red radiation from a scene and a display in which an image of the scene derived from the infra-red radiation can be viewed, and wherein a video camera is provided to enable visible light from the scene to be imaged on the display.

2. A head-mountable display system as claimed in claim 1, in which the display system is incorporated in a firefighter's helmet.

3. A head-mountable display system as claimed in claim 1 or claim 2, in which the infra-red sensor and the video camera are substantially co-boresighted.

4. A head-mountable display system as claimed in any one of claims 1 to 3, in which a switch is provided to enable either the infra-red image or the visual image to be viewed in the display.
